# DEMANDE DE BREVET EUROPEEN

(11) **EP 4 060 163 A1**
(43) Date de publication de la demande: **21.09.2022**
(21) Numéro de dépôt: 22160397.0
(22) Date de dépôt: 07.03.2022
(51) Int. Cl.: F01D 15/10, F01D 21/20

(54) **PROCÉDÉ DE PROTECTION DE LA MISE EN ROTATION D'UN MOTEUR D'AERONEF**

(30) Priorité: 17.03.2021 FR 2102680
(71) Demandeur: AIRBUS OPERATIONS (S.A.S.), 31060 Toulouse (FR)
(72) Inventeur: BOYER, David, 31060 TOULOUSE (FR); ANTONIO, Gilian, 31060 TOULOUSE (FR)
(74) Mandataire: Sarraméa, Claude

(57) **Abrégé**

L'invention concerne un procédé de protection de la mise en rotation d'un moteur d'un aéronef comprenant une source d'alimentation en énergie, un moteur muni d'un rotor et étant associé à un système de démarrage configuré pour, lorsque alimenté en énergie, produire un effort mécanique afin de faire tourner le rotor, le moteur étant contrôlé par une avionique de contrôle des moteurs configurée pour assurer le contrôle du moteur selon des actions des pilotes sur des commandes, le procédé comprenant les étapes suivantes :
- une étape (E1) d'acquisition mise en oeuvre en continu, dans laquelle l'avionique de contrôle des moteurs acquiert la vitesse de rotation du rotor ;
- une étape (E2) de comparaison, dans laquelle l'avionique de contrôle des moteurs compare, en continu, la vitesse de rotation acquise avec une vitesse de rotation prédéterminée ;
- une étape (E3) de vérification, dans laquelle l'avionique de contrôle des moteurs vérifie que la rotation du rotor correspond à une action volontaire des pilotes ;
dans le cas où la rotation du rotor est consécutive à une action du pilote, l'avionique de contrôle des moteurs autorise l'alimentation en énergie du système de démarrage, et dans le cas contraire, dans une étape de désactivation, l'avionique de contrôle des moteurs déconnecte le système de démarrage du moteur de sa source d'alimentation en énergie afin de stopper la rotation du rotor.

## Description

La présente invention concerne un procédé de protection de la mise en rotation d'un moteur d'un aéronef durant les phases au sol, ainsi qu'un aéronef équipé d'une avionique de contrôle des moteurs pour mettre en œuvre un tel procédé.

Il est connu qu'après une phase au sol d'un aéronef successive à un vol, un gradient thermique au niveau du rotor de chaque moteur encore chaud provoque la dilatation de certaines aubes et/ou du rotor, causant leur déformation et provoquant, de ce fait, une réduction du jeu axial ou diamétral par rapport à l'axe de rotation normal de l'aubage, une dilatation des aubes,....

De manière pratique, il n'est pas recommandé de redémarrer un moteur après un temps d'attente court (moins d'une heure trente), car si le moteur n'a pas eu le temps de refroidir suffisamment, il est possible qu'au redémarrage, les extrémités de certaines aubes du rotor frottent sur le carter et/ou qu'un aubage dévie de son axe de rotation. Ce phénomène appelé rotor arqué (pour « bowed rotor » en anglais) risque de se produire jusqu'à ce que la température entre les aubages devienne uniforme du fait d'une rotation du moteur.

De manière connue, un système de démarrage électrique ou pneumatique est utilisé pour démarrer un moteur. Le système de démarrage produit, lorsqu'il est activé et alimenté en énergie, un effort mécanique permettant de faire tourner un rotor de l'étage du compresseur, dit rotor N2, du moteur. Le rotor N2 peut être tourné à une faible vitesse pour permettre une ventilation du moteur permettant la dissipation du gradient thermique et donc l'uniformisation de la température entre les aubages, ou à une vitesse plus importante pour ventiler le moteur ou encore permettre l'allumage du moteur après injection de carburant dans les éléments appropriés du moteur, qui ont été mis en rotation par le rotor N2.

Suivant la logique prédominante en aéronautique d'augmenter les mécanismes de sécurité, il existe un besoin de confirmer que la mise en rotation du rotor N2 d'un moteur correspond effectivement à l'intention du pilote afin d'éviter tout endommagement du moteur si ce dernier n'a pas eu le temps de refroidir.

Il existe donc un besoin d'empêcher toute rotation non contrôlée d'un moteur. A cet effet, l'invention concerne un procédé de protection de la mise en rotation d'un moteur tel que revendiqué dans la revendication 1. Le brevet US6393353 décrit le préambule de la revendication 1.

L'invention permet d'empêcher une activation involontaire du système de démarrage qui pourrait, par exemple, être causée par un court-circuit (pour un système de démarrage électrique) ou une mauvaise gestion du circuit pneumatique de l'aéronef (pour un système de démarrage pneumatique).

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une vue schématique et de dessus d'un aéronef équipé de deux turbomachines dont les moteurs sont contrôlés par une avionique de contrôle des moteurs et équipé d'un circuit d'alimentation en énergie pneumatique, selon un mode de réalisation de l'invention ;
- la figure 2 est une vue schématique détaillée de la connexion entre l'avionique de contrôle des moteurs, le circuit d'alimentation en énergie pneumatique et une turbomachine de l'aéronef représenté à la figure 1 ;
- la figure 3 est une vue schématique des étapes d'un procédé de protection de la mise en rotation de chaque moteur mis en œuvre par l'avionique de contrôle des moteurs de l'aéronef représenté à la figure 1;
- la figure 4 est une vue schématique et de dessus d'un aéronef équipé de deux turbomachines dont les moteurs sont contrôlés par une avionique de contrôle des moteurs et équipé d'un circuit d'alimentation en énergie électrique, selon un autre mode de réalisation de l'invention ;
- la figure 5 est une vue schématique détaillée de la connexion entre l'avionique de contrôle des moteurs, le circuit d'alimentation en énergie électrique et une turbomachine de l'aéronef représenté à la figure 4 ;
- la figure 6 est une vue schématique des étapes d'un procédé de protection de la mise en rotation de chaque moteur mis en œuvre par l'avionique de contrôle des moteurs de l'aéronef représenté à la figure 4.

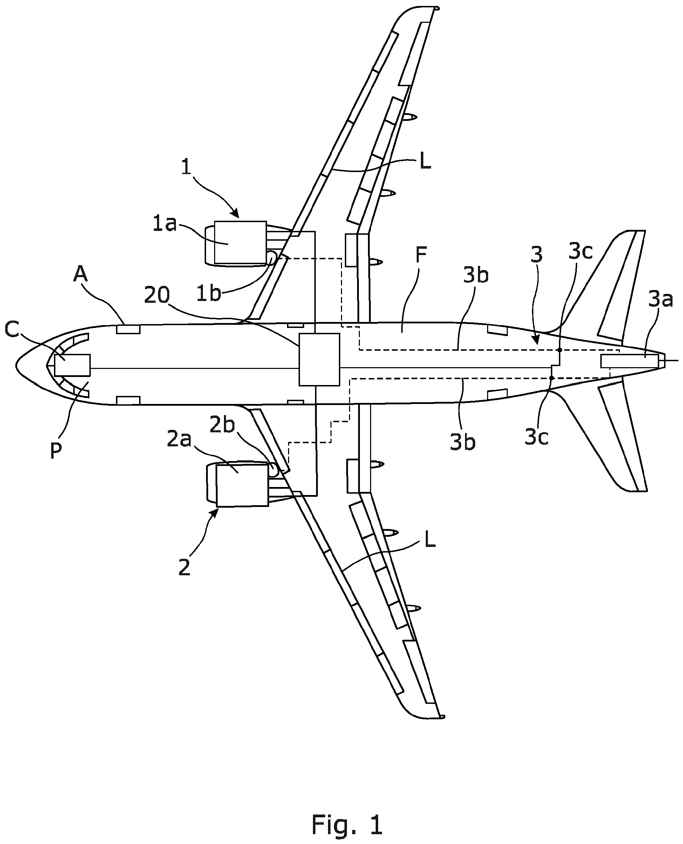

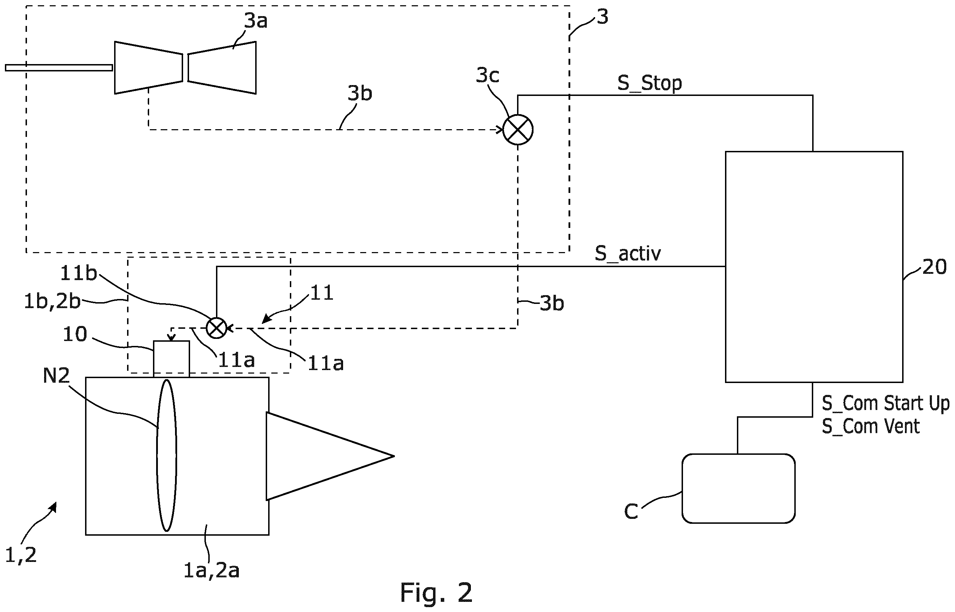

En référence avec les figures 1 et 2, un aéronef A comporte une turbomachine 1,2 montée sous chaque aile L de l'aéronef et un circuit d'alimentation en énergie pneumatique 3 permettant d'alimenter différents systèmes de l'aéronef en air, notamment des systèmes de la cabine (non représentée) ou les turbomachines 1, 2. Le circuit d'alimentation en énergie pneumatique 3 comprend une source d'alimentation pneumatique 3a pour produire un débit d'air lorsque activée, différents tuyaux d'air 3b pour acheminer l'air de la source d'alimentation pneumatique vers les systèmes, et un système de contrôle pilotable 3c pour connecter pneumatiquement ou au contraire déconnecter la source d'alimentation pneumatique 3a et chacun des différents systèmes afin de contrôler la distribution du débit d'air produit aux les systèmes. La source d'alimentation pneumatique 3a est, par exemple, une unité de puissance auxiliaire de type APU (« Auxilliary Power Unit » en anglais) logée dans le fuselage F de l'aéronef.

Le système de contrôle 3c comprend au moins un actuateur (non représenté), par exemple de type vannes d'arrêt.

Chaque turbomachine 1, 2 comprend un moteur la, 2a et associé à chaque moteur, un système de démarrage 1b, 2b du moteur.

Le système de démarrage 1b, 2b d'un moteur comprend un actionneur 10 de type turbine de démarrage relié mécaniquement au rotor et pneumatiquement au circuit d'alimentation en énergie pneumatique 3 au travers d'un dispositif de régulation 11b, de type vanne de démarrage 11b (vanne SAV en terminologie aéronautique, SAV pour « Starter Air Valve » en anglais) agencé en amont de la turbine de démarrage 10, si l'on considère le sens d'écoulement de l'air sortant de la source d'alimentation pneumatique 3a (indiqué par des flèches à la figure 2). Dans le détail, la vanne de démarrage 11b est pneumatiquement connectée, d'une part à turbine de démarrage 10 par un premier conduit d'air 11a, et d'autre part à un tuyau d'air 3b du circuit d'alimentation en énergie pneumatique 3 par un second conduit d'air 11a.

La vanne de démarrage 11b est configurée pour réguler le débit d'air entrant dans la turbine de démarrage 10 et est à cet effet, commandable électroniquement entre une position ouverte où elle permet le passage d'air dans le premier conduit d'air 11a vers la turbine de démarrage et une position fermée où elle bloque le passage d'air. La vanne de démarrage 11b peut également, en cas de panne de son électronique, être forcée manuellement en positon ouverte par un opérateur au sol afin de pouvoir démarrer le moteur la, 2a malgré cette panne et ce, sans attendre une réparation qui nécessiterait de bloquer l'aéronef A au sol pendant une longue période.

La turbine de démarrage 10 est apte à produire, lorsqu'elle est soumise à un débit d'air provenant de la source d'alimentation pneumatique 3a, un effort mécanique permettant de faire tourner le rotor N2 du moteur la, 2a. Le débit d'air fourni par la source d'alimentation pneumatique 3a est ainsi utilisé pour le démarrage/ventilation de chaque moteur la, 2a avant le décollage. La vanne de démarrage 11b permet de réguler l'effort mécanique produit par la turbine de démarrage 10 entre un effort nul (position fermée de la vanne de démarrage) et un effort maximal (position ouverte de la vanne de démarrage).

L'aéronef A comprend également une avionique de contrôle des moteurs 20 permettant d'assurer la surveillance et le contrôle des moteurs la, 2a, et comprend également des commandes C, situées dans le poste de pilotage P, avec lesquelles le pilote peut agir pour piloter l'aéronef. Les commandes C sont électriquement connectées au système de contrôle pilotable 3c du circuit d'alimentation pneumatique 3 ainsi qu'à l'avionique de contrôle des moteurs 20. Les commandes C comprennent, par exemple, des interfaces de types interrupteurs, leviers ou boutons permettant, en particulier, de piloter le système de contrôle 3c du circuit d'alimentation pneumatique 3 ainsi que de donner des instructions à l'avionique de contrôle des moteurs 20 pour contrôler/piloter les moteur la,2a. En particulier, les pilotes utilisent les commandes C pour ordonner à l'avionique de contrôle des moteurs 20 d'enclencher une procédure de démarrage ou une procédure de ventilation du moteur.

L'avionique de contrôle des moteurs 20 comprend, pour chaque moteur la, 2a:
- une pluralité de capteurs (non représentés) arrangés sur le moteur la, 2a afin de surveiller le fonctionnement du moteur et en particulier de mesurer la vitesse de rotation du rotor N2 du moteur la, 2a;
- des calculateurs (non représentés) de type unité centrale pour piloter chacun le moteur la, 2a, les organes du moteur (pompes, vannes comme des vannes d'essence -non représentés) ainsi que le système de démarrage 1b,2b (notamment position de la vanne de démarrage 11b) du moteur en fonction des informations des capteurs et des actions du pilote avec les commandes C.

Dans une logique booléenne, lorsqu'un pilote interagit avec les commandes C pour démarrer un moteur la, 2a, le bit d'un signal S_ComStartUp, au niveau de l'avionique de contrôle des moteurs 20, change d'état. Par exemple, le bit du signal S_ComStartUp passe de 0 à 1. De la même manière, lorsqu'un pilote interagit avec l'organe de commande d'un moteur pour ventiler un moteur, le bit d'un signal S_ComVent, au niveau de l'avionique de contrôle des moteurs 20, change d'état. Par exemple, le bit du signal S_ComVent passe de 0 à 1.

Au changement d'état du signal S_ComStartUp, passage à 1 selon l'exemple ci-dessus, l'avionique de contrôle des moteurs 20 envoie un signal de pilotage S_activ à la vanne de démarrage 11b pour que cette dernière se déplace de sa position fermée vers sa position ouverte afin de, si la source de d'alimentation pneumatique 3a est activée, déclencher la rotation du rotor N2 jusqu'à un régime de démarrage.

Au changement d'état du signal S_ComVent, passage à 1 selon l'exemple ci-dessus, l'avionique de contrôle des moteurs 20 envoie un signal de pilotage S_activ à la vanne de démarrage 11b pour que cette dernière se déplace de sa position fermée vers sa position ouverte afin de, si la source de d'alimentation pneumatique est activée, déclencher la rotation du rotor N2 jusqu'à un régime de ventilation (régime de ventilation < régime de démarrage)

La différence de vitesse de rotation entre le régime de ventilation et le régime de démarrage est obtenue de manière connue par la mise en œuvre de différents systèmes connus.

Selon l'invention, l'avionique de contrôle des moteurs 20 est, pour chaque turbomachine 1, 2, connectée au système de contrôle 3c du circuit d'alimentation en énergie pneumatique qui permet de connecter/déconnecter le système de démarrage du moteur 1b, 2b et la source d'alimentation en énergie pneumatique 3a. En outre l'avionique de contrôle des moteur, met en œuvre un procédé de protection de la mise en rotation du moteur la, 2a permettant de mettre en sécurité le moteur la, 2a par le pilotage du système de contrôle 3c pour faire cesser l'effort mécanique permettant de faire tourner le rotor N2, si une rotation du rotor N2 au-delà d'un certain seuil et détectée et que cette rotation ne correspond pas à une intention des pilotes.

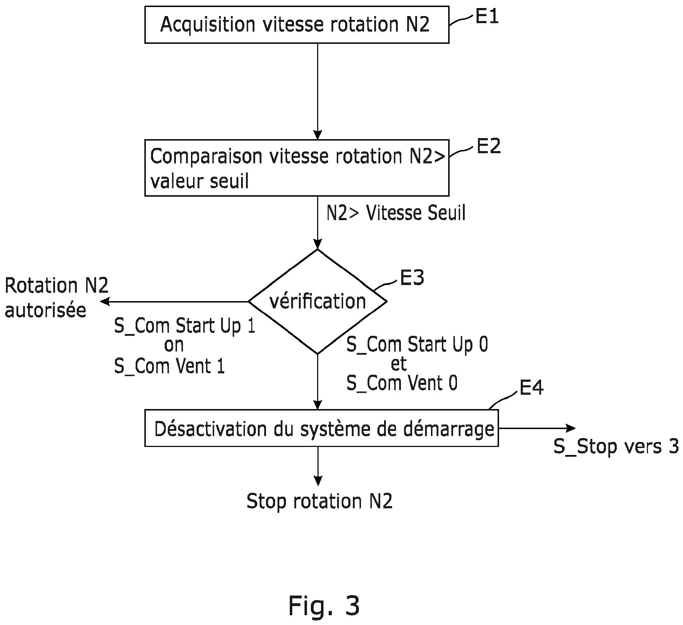

Le procédé mis en œuvre pour un moteur la, 2a et détaillé en relation avec la figure 3, comprend les étapes successives suivantes :
Dans une étape E1 d'acquisition mise en œuvre en continue, l'avionique de contrôle des moteurs 20 acquiert la vitesse de rotation du rotor N2 mesurée par les capteurs.

Dans une étape E2 de comparaison, l'avionique de contrôle des moteurs 20 compare, en continue, la vitesse de rotation du rotor N2 acquise avec une vitesse de rotation prédéterminée, dite seuil, qui correspond à la vitesse de rotation minimum à partir de laquelle les capteurs sont configurés pour fournir une information de vitesse de rotation (caractéristiques techniques du capteur). Cette vitesse est inférieure à la vitesse de rotation du régime de ventilation. Pour un ordre de grandeur, pour une vitesse de rotation du rotor N2 à 100% lorsque le rotor N2 tourne à son régime de rotation maximal, la vitesse de régime de ventilation est de l'ordre de 25 % et la vitesse seuil est de l'ordre de 1 à 3%.

Dans une étape E3 de vérification, mise en œuvre si la vitesse de rotation du rotor N2 acquise est supérieure ou égale à la vitesse de rotation seuil pendant un temps prédéterminé (par exemple de 1 à 5 secondes), l'avionique de contrôle des moteurs 20 vérifie que la rotation du rotor N2 correspond à l'intention des pilotes. A cet effet, l'avionique de contrôle des moteurs 20 vérifie que le pilote a préalablement interagit avec les commandes C pour sélectionner la procédure de démarrage ou la procédure de ventilation du moteur la,2a. Concrètement, l'avionique de contrôle des moteurs 20 vérifie que le signal S_ComStartUp ou le signal S_ComVent a pris un état (dans l'exemple passage de 0 à 1) indicatif de la sélection d'une séquence de démarrage, respectivement de ventilation. Dans ce cas, la rotation est la rotation du rotor N2 est délibérée, et aucune action pour stopper la rotation n'est entreprise par l'avionique de contrôle des moteurs 20.

Dans le cas contraire, si ni le signal S_ComStartUp ni le signal S_ComVent n'a pris un état indicatif de la sélection d'une séquence de démarrage, respectivement de ventilation, et dans une étape E4 de désactivation, l'avionique de contrôle des moteurs 20 génère et envoie un signal de pilotage S_Stop au système de contrôle 3c pour déconnecter le système de démarrage du moteur lb,2b et la source d'alimentation 3a afin de stopper l'effort mécanique fournit par l'actionneur 10 et faisant tourner le rotor N2.

L'invention assure une protection des moteurs contre la mise en rotation involontaire de ses parties tournantes. L'invention trouve notamment application à un cas où la vanne de démarrage 11b aurait été placée manuellement en position ouverte et où la source de ventilation pneumatique 3a qui aurait été allumée dans le but de fournir de l'air à des systèmes situés dans la cabine de l'aéronef avant le décollage, fournit également, suite à une mauvaise gestion du circuit d'alimentation en énergie pneumatique 3 par les équipes au sol, de l'air au système de démarrage 1b, 2b du moteur.

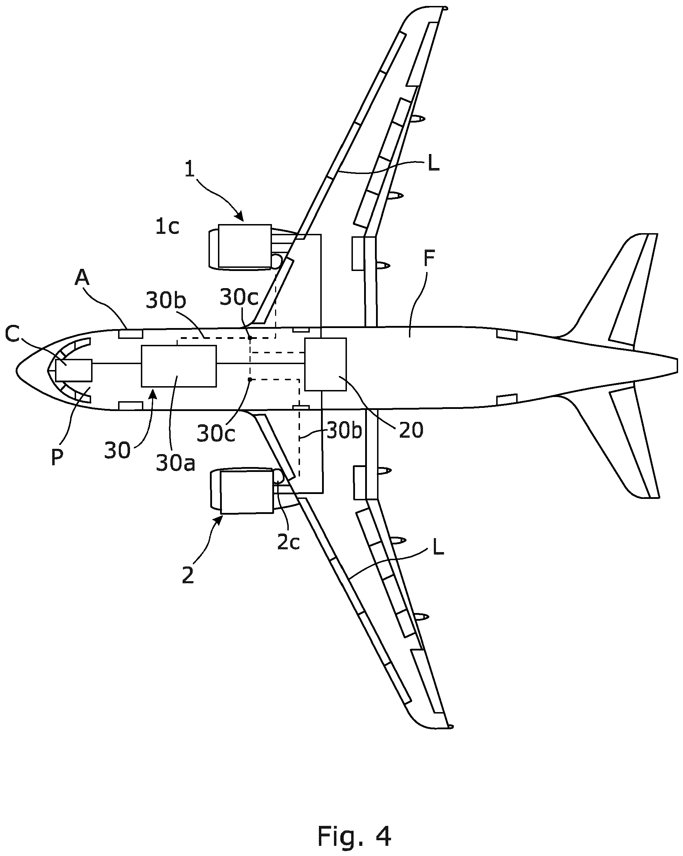

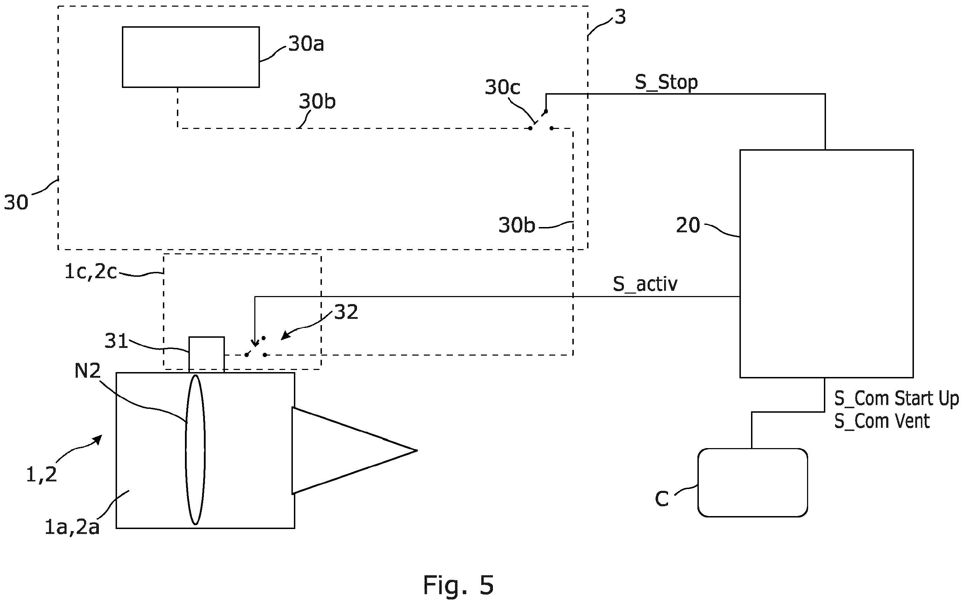

L'invention a été décrite pour le cas où le système de démarrage du moteur 1b, 2b est pneumatique. En relation avec les figures 4 et 5, l'invention trouve également application à un système de démarrage électrique du moteur 1c, 2c. De manière connue, un aéronef A comprend un circuit d'alimentation en énergie électrique 30 qui comprend une source d'alimentation électrique 30a de type batterie ou générateur électrique pour fournir de l'énergie électrique aux systèmes de l'aéronef (notamment l'avionique de contrôle des moteurs, les commandes...), différents câbles 30b reliant des systèmes de l'aéronef A dont les systèmes de démarrage des moteurs lb,2b, à la source d'alimentation électrique 30a, et un système de contrôle 30c pilotables via les commandes C. Le système de contrôle 30c comprend au moins un élément de type relai/coupe-circuit pour connecter ou déconnecter la source d'alimentation électrique 30a et chacun des différents systèmes afin de contrôler la distribution d'un courant électrique aux systèmes. En fonctionnement normal, le système de démarrage électrique 1c,2c de chaque moteur est connecté à la source d'alimentation électrique 30a.

On notera que le circuit d'alimentation en énergie électrique n'a pas été représenté à la figure 1 pour ne pas surcharger la figure 1, bien qu'il soit présent dans tout aéronef.

Le système de démarrage électrique 1c,2c d'un moteur comprend un actionneur 31 de type moteur électrique relié mécaniquement au rotor N2 et électriquement au circuit d'alimentation électrique 30 au travers d'un dispositif de régulation 32 placé en série entre un câble 30b du circuit d'alimentation électrique 30 et le moteur électrique 31.

Le dispositif de régulation 32, de type rhéostat/potentiomètre, est commandable par l'avionique de contrôle des moteurs 20 pour modifier l'intensité du courant que reçoit le moteur électrique 31 entre une intensité maximale fournie par la source d'alimentation en électricité, et une intensité nulle.

Le moteur électrique 31 est apte à produire, lorsqu'il est alimenté en énergie électrique provenant de la source d'alimentation électrique 30a, un effort mécanique permettant de faire tourner le rotor N2 du moteur. Le rhéostat/potentiomètre permet de réguler l'effort mécanique produit par le moteur électrique 31 entre un effort nul (intensité nulle) et un effort maximal (intensité maximale)

En reprenant l'exemple précèdent appliqué cette fois au cas de systèmes de démarrage électriques 1c, 2c des moteurs, au changement d'état du signal S_ComStartUp vers un état indicatif de la sélection d'une séquence de démarrage, respectivement de ventilation, l'avionique de contrôle des moteurs 20 envoie un signal de pilotage S_activ au dispositif de régulation 32 pour alimenter le moteur électrique 31 afin de déclencher la rotation du rotor N2 jusqu'à un régime de démarrage.

Au changement d'état du signal S_ComVent vers un état indicatif de la sélection d'une séquence de démarrage, respectivement de ventilation, l'avionique de contrôle des moteurs 20 envoie un signal de pilotage S_activ au dispositif de régulation 32 pour alimenter le moteur électrique 31 afin de déclencher la rotation du rotor N2 jusqu'à un régime de ventillation.

Dans ce mode de réalisation de l'invention spécifique à un système de démarrage du moteur comprenant un moteur de démarrage électrique 1c,2c, et en relation avec les figures 4 et 5, l'avionique de contrôle des moteurs 20 est, pour chaque turbomachine 1, 2, connectée au système de contrôle 30c du circuit d'alimentation en énergie électrique 30 qui permet de connecter/déconnecter le système de démarrage du moteur 1c, 2c et la source d'alimentation en énergie électrique 30a. En outre, l'avionique de contrôle des moteurs 20 met en œuvre un procédé de protection de la mise en rotation du moteur la, 2a permettant de mettre en sécurité le moteur 1a, 2a par le pilotage du système de contrôle 30c pour faire cesser l'effort mécanique permettant de faire tourner le rotor N2, si une rotation du rotor N2 au-delà d'un certain seuil et détectée et que cette rotation ne correspond pas à une intention des pilotes.

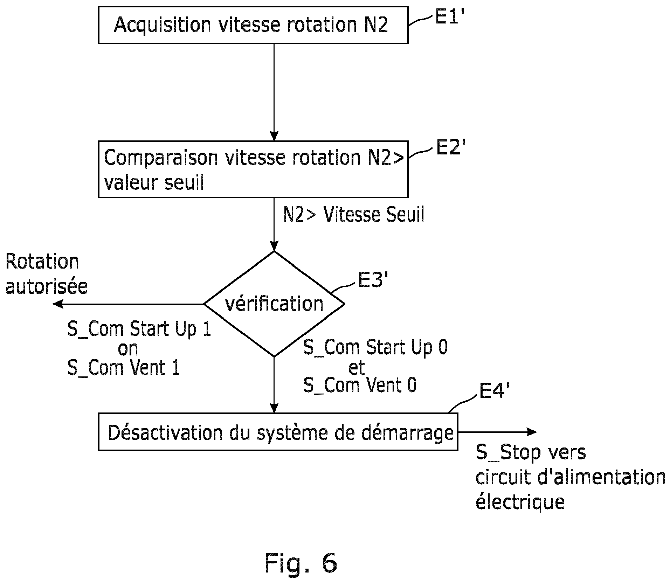

En référence avec la figure 6, dans ce mode de réalisation avec un système de démarrage électrique 1c,2c, le procédé mis en œuvre par l'avionique de contrôle des moteurs 20 comprend les mêmes étapes d'acquisition E1', de comparaison E2', et de vérification E3'que celles décrites plus haut. L'étape de désactivation E4' est, par contre, différente en ce que le signal de pilotage S_stop est cette fois envoyé au système de contrôle 30c qui permet de connectre/déconnecter le système de démarrage du moteur lb,2b et la source d'alimentation électrique 30a. A la réception du signal de pilotage S_stop, le système de contrôle 30c déconnecte le système de démarrage du moteur 1b, 2b de la source d'alimentation électrique 30a afin de stopper l'effort mécanique fournit par le système de démarrage du moteur 1b, 2 et faisant tourner le rotor N2.

Ce mode de réalisation trouve notamment application à un cas où le moteur du système de démarrage électrique 1c, 2c aurait entraîné la rotation non volontaire et non contrôlée du rotor N2 suite à un défaut électrique (défaut dans la commande par exemple) survenant sur le dispositif de régulation 32a.

## Revendications

1. Procédé de protection de la mise en rotation d'un moteur (la, 2a) d'un aéronef (A) comprenant des commandes (C) actionnables par un pilote, un moteur (la, 2a) muni d'un rotor (N2) et étant associé à un système de démarrage (1b-c, 2b-c), un circuit d'alimentation en énergie (3, 30) avec une source d'alimentation en énergie (3a,30a) et un système de contrôle (3c,30c) pilotable via les commandes (C) pour connecter/déconnecter le système de démarrage (1b-c, 2b-c) et la source d'alimentation en énergie (3a, 30a), une avionique de contrôle des moteurs (20) connectée aux commandes (C) et configurée pour assurer le contrôle du moteur (1a,2a) selon les actions sur les commandes (C), ladite avionique (20) comprenant des capteurs de rotation arrangés sur le moteur (la,2a) pour mesurer la vitesse de rotation du rotor (N2), le système de démarrage (1b-c, 2b-c) comprenant un actionneur (10,31) connecté au circuit d'alimentation en énergie (3a,30a) au travers d'un dispositif de régulation (1 lb,32) piloté par l'avionique de contrôle des moteurs (20) pour réguler l'alimentation en énergie de l'actionneur (10,31), l'actionneur (10,31) étant relié mécaniquement au rotor (N2) et configuré pour faire tourner le rotor (N2) lorsque alimenté en énergie, l'avionique de contrôle des moteurs (20) étant également connectée au système de contrôle (3c,30c), le procédé comprenant les étapes suivantes :
- une étape (E1,E1') d'acquisition mise en œuvre en continu, dans laquelle l'avionique de contrôle des moteurs (20) acquiert la vitesse de rotation du rotor (N2) mesurée par les capteurs ;
- une étape (E2, E2') de comparaison, dans laquelle l'avionique de contrôle des moteurs (20) compare, en continu, la vitesse de rotation acquise avec une vitesse de rotation prédéterminée ;
le procédé étant **caractérisé en ce qu'**il comprend les étapes suivantes :
- une étape (E3, E3') de vérification, dans laquelle l'avionique de contrôle des moteurs (20) vérifie que la rotation du rotor (N2) est consécutive à une interaction du pilote avec les commandes (C) ; et
dans le cas où la rotation du rotor (N2) est consécutive à une interaction du pilote avec les commandes (C), l'avionique de contrôle des moteurs (20) autorise l'alimentation en énergie du système de démarrage (lb-c,2b-c), et dans le cas contraire, dans une étape (E4, E4') de désactivation, l'avionique de contrôle des moteurs (20), génère un signal de pilotage (S_Stop) vers le système de contrôle (3c,30c) pour déconnecter le système de démarrage du moteur de la source d'alimentation en énergie (3a,30a) afin de stopper la rotation du rotor (N2).

2. Aéronef (A) comprenant des commandes (C) actionnables par un pilote, un moteur (la, 2a) muni d'un rotor (N2) et étant associé à un système de démarrage (1b-c, 2b-c), un circuit d'alimentation en énergie (3, 30) avec une source d'alimentation en énergie (3a,30a) et un système de contrôle pilotable (3c,30c) via les commandes (C) pour connecter/déconnecter le système de démarrage (1b-c, 2b-c) et la source d'alimentation en énergie (3a, 30a), une avionique de contrôle des moteurs (20) connectée aux commandes (C) et configurée pour assurer le contrôle du moteur (la,2a) selon les actions sur les commandes (C), ladite avionique (20) comprenant des capteurs de rotation arrangés sur le moteur (1a,2a) pour mesurer la vitesse de rotation du rotor (N2), le système de démarrage (1b-c, 2b-c) comprenant un actionneur (10,31) connecté au circuit d'alimentation en énergie (3a,30a) au travers d'un dispositif de régulation (11b,32) piloté par l'avionique de contrôle des moteurs (20) pour réguler l'alimentation en énergie de l'actionneur (10,31), l'actionneur (10,31) étant relié mécaniquement au rotor (N2) et configuré pour faire tourner le rotor (N2) lorsque alimenté en énergie, **caractérisé en ce que** l'avionique de contrôle des moteurs (20) est également connectée au système de contrôle (3c,30c) et est configurée pour piloter ledit système (3c,30c) pour déconnecter le système de démarrage du moteur et la source d'alimentation en énergie (3a, 30a) en fonction de la valeur de la vitesse mesurée par les capteurs et d'une absence d'action sur les commandes (C) visant à faire tourner le rotor (N2).
